# EUROPEAN PATENT SPECIFICATION

(11) **EP 0 397 306 B1**
(45) Date of publication and mention of the grant of the patent: **18.05.1994**
(21) Application number: 90302890.0
(22) Date of filing: 16.03.1990
(51) Int. Cl.: G01M 15/00, F02P 5/04, F02D 35/02

(54) **Fuel ignition sensor**
Kraftstoffzündungssensor
Détecteur d'allumage de carburant

(30) Priority: 14.04.1989 GB 8908519
(43) Date of publication of application: 14.11.1990
(73) Proprietor: LUCAS INDUSTRIES public limited company, Solihull, West Midlands B91 3TX (GB)
(72) Inventor: Pinnock, Robert Andrew, Bournville, Birmingham B30 2DN (GB)
(74) Representative: Thompson, George Michael

(56) References cited:
- DE-A- 3 042 399
- DE-A- 3 413 850
- GB-A- 2 193 804
- US-A- 4 703 173
- PATENT ABSTRACTS OF JAPAN vol. 10, no. 353 (M-539) 28 November 1986, & JP-A-61152965
- PATENT ABSTRACTS OF JAPAN vol. 7, no. 15 (P-169) 21 January 1983, & JP-A-57171239

## Description

This invention relates a fuel ignition sensor for use with internal combustion engines and of the kind comprising a tubular body adapted to be mounted in use, in the cylinder head of an engine so that the inner end of the body is disposed in the combustion chamber of the engine, the bore in the body mounting a rod formed from radiation transmitting material, the rod being secured within the bore by means of bonding material, the end of the rod at said inner end of the body acting as a window through which radiation which is generated on combustion of fuel in the combustion chamber, passes into the rod and is transmitted through the rod to a radiation responsive device.

Such a sensor is shown in GB-A-2193804 and it has in the bore at the inner end of the body, an inwardly extending flange against which the end of the rod is located. The purpose of the flange is to prevent the rod falling into the engine combustion chamber in the event that the lining material which retains the rod within the body fails. The problem with such an arrangement is that the end face of the rod is recessed from the end of the body with the result that the field of view of the sensor is restricted. In a compression ignition engine where combustion of the fuel can start more or less at any point in the combustion chamber, combustion may start at a point outside the field of view so that the signal provided by the radiation responsive device is not reliable as an indicator of the commencement of combustion of the fuel.

Another form of sensor is seen in DE-A-3042399 in which there is mounted in a bore in a supporting body, a quartz rod. The body defines an inwardly extending flange portion at its end which is exposed within the combustion chamber of the engine, and the rod is urged into sealing engagement with the flange by means of an abutment sleeve. The axial force is generated by a rolling operation which is applied to the supporting body. The presented surfaces of the flange and the rod are provided with complementary tapers and interposed between the surfaces in a sealing ring. The end face of the rod in one arrangement lies some distance back from the end of the body and in another arrangement is provided with a projection of reduced diameter which extends from the main portion of the rod through the aperture in the flange.

The object of the present invention is to provide a fuel ignition sensor in an improved form.

According to the invention in a fuel ignition sensor of the kind specified the bore at the inner end of the body is tapered inwardly to the end of the body, the taper extending to the end of the bore, and the rod is of complementary shape whereby the end of the rod lies flush with or extends beyond the end of the body.

In the accompanying drawings:
Figure 1 is a sectional side elevation of a known form of sensor,
Figure 2 shows two response curves of sensors,
Figure 3 is a view to an enlarged scale showing a modification in accordance with the invention,
Figures 4, 5 6 and 7 are views similar to Figure 3 showing alternative forms of the end of the light transmitting rod, and
Figure 8 is a view showing a sensor mounted in the cylinder head of a compression ignition engine.

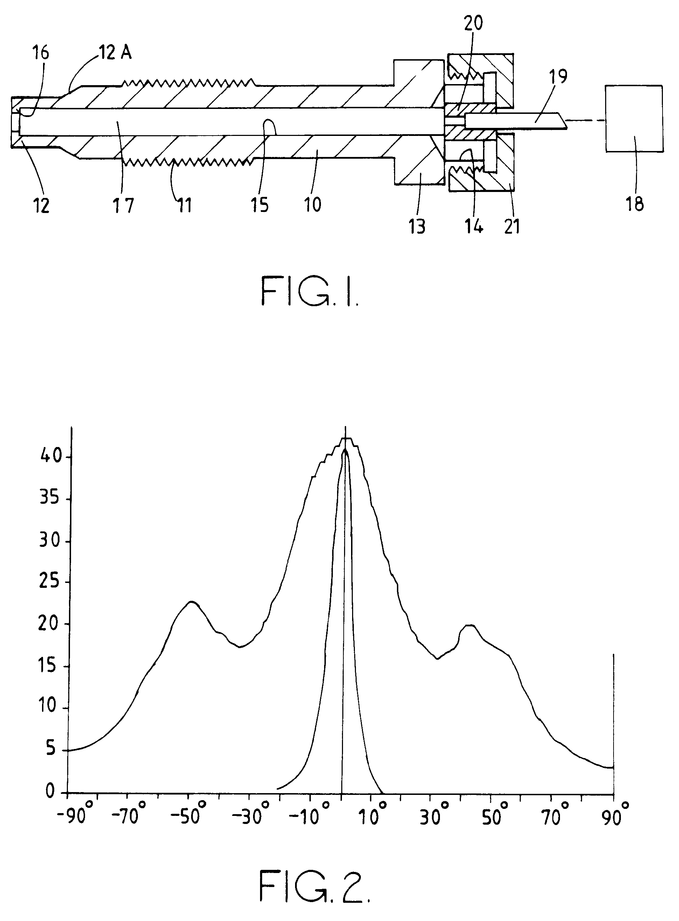

Referring to Figure 1 of the drawings the sensor comprises a tubular elongated body part 10 formed from metal and having a screw threaded portion 11 whereby it can be secured within a bore formed in the cylinder head of the engine. The body defines a reduced inner end portion 12 which is connected to the main body part 10 by a tapered portion 12a which seals with a complementary portion in the bore in the cylinder head to form a gas tight seal. The body part is also provided with a hexagonal flange 13 from which extends a projecting outer end portion 14 provided with a peripheral screw thread.

The body part defines a bore 15 and at the inner end of the body there is defined an inwardly extending flange 16. Mounted within the bore 15 is a radiation transmitting rod 17 which for example is formed from quartz which bears against the flange 16 and is secured within the bore by means of a visco-elastic material which provides a seal between the rod and the wall of the bore and also acts to insulate the rod from thermal and mechanical shock.

At a position remote from the sensor there is provided a radiation responsive device 18 and this is connected to the outer end of the rod by means of a light transmitting fibre bundle 19. The end of the bundle adjacent the rod is secured within a ferrule 20 and this is retained in position against the end of the rod by means of a threaded end cap 21 which is engaged with the thread on the aforesaid outer end portion 14. In use, the inner end of the sensor extends within the combustion chamber of the engine and light which is generated upon combustion of fuel, is transmitted through the rod and along the fibre to the device 18 to generate an electrical signal indicative of the start of combustion of fuel. This signal can be used in an engine management system to control the injection of fuel into the combustion chamber in the case of a compression ignition engine, or the timing of the spark in the case of a petrol engine.

The inner end of the rod due to the thickness of the flange 16 is recessed behind the end face of the sensor with the result that the "field of view" of the sensor is reduced. Figure 2 shows an inner curve which demonstrates a comparatively narrow field of view for the sensor.

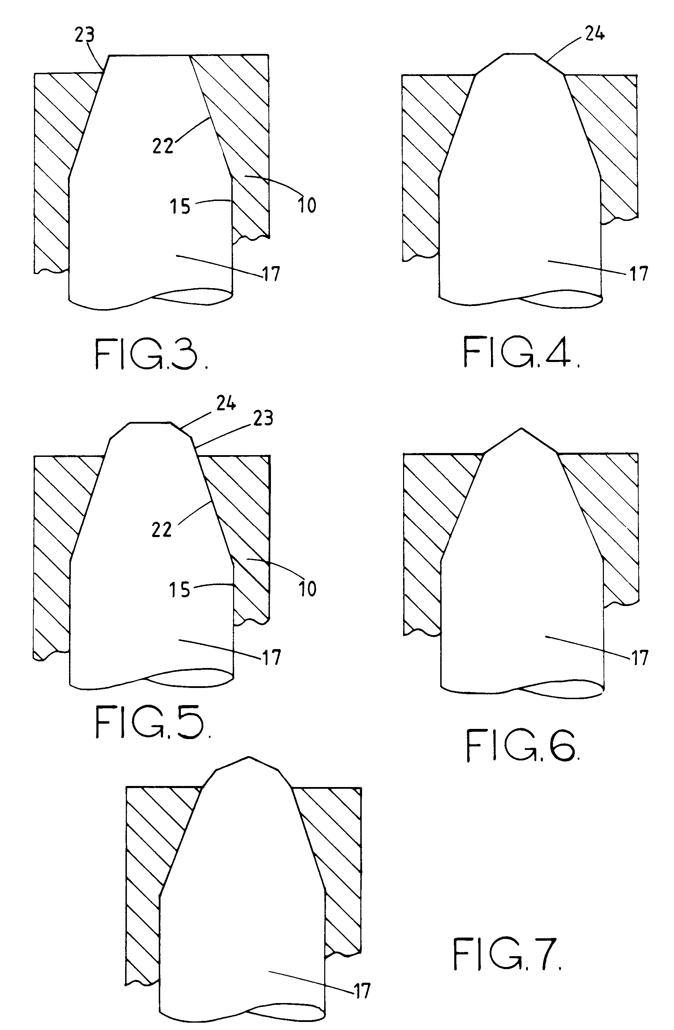

The purpose of the flange 16 is to prevent the rod 17 falling into the combustion chamber in the event of failure of the visco-elastic compound which both seals and secures the rod in position. In order to extend the field of view it is proposed as shown in the right hand portion of Figure 3, to extend the end of the rod up to the end of the body part 10 In order to provide the equivalent of the flange 16a, the end portion 22 of the bore is of tapered form preferably and as shown, of frusto conical form and the end portion of the rod 17 is of complementary shape. The effect is that the inner end face of the rod can lie flush with the end of the body part. The "field of view" which can be obtained with a flat ended rod is in theory, 180° or in terms of solid angles, 2π ster. In practice however the transmission of light for an air/quartz interface decrease as the incident angle increases. Thus the practical "field of view" is considerably less than that stated above.

In order to enhance the practical field of view it is proposed to allow the rod to project beyond the end of the body part as shown in the left hand portion of Figure 3. The effect of this is that light originating from a point in the combustion chamber which would give a high incident angle with the flat portion of the rod will give a lower incident angle with the tapered section 23 of the rod so that the transmission of the light across the air/quartz interface will be improved. The taper angle chosen for the end portion of the bore may not be ideal from the point of view of light collection and therefore the arrangement shown in Figure 4 can be adopted. In this case the rod has a first tapered section which cooperates with the tapered portion of the body part and a second tapered section 24 leading to the flat end of the rod. Figure 5 shows a modification in which the first tapered section 23 projects beyond the end of the body. The outer curve in Figure 2 shows the improvement in the field of view obtained and with the rod projecting beyond the end face it is possible to have a field of view which extends through more than 180 degrees.

Figure 6 shows a modification in which the flat end of the rod is removed, the projecting portion of the rod tapering to a point. The taper angle is greater than the tapered portion of the rod within the body part 10 A further modification is seen in Figure 7 in which the projecting portion has a double taper.

The sensor shown in Figure 1 projects only partly into the combustion chamber in order to obtain as large a field of view as possible. The result is that the tip of the sensor lies in a zone of the combustion chamber adjacent the wall where the slow moving gas results in the desposition of soot on the end of the rod.

With the improved "field of view" of the sensors according to the invention it is possible to position the end of the body away from the wall of the combustion chamber at a position where the gas velocity is higher The effect of this is to reduce the risk of the exposed end of the rod becoming coated with soot.

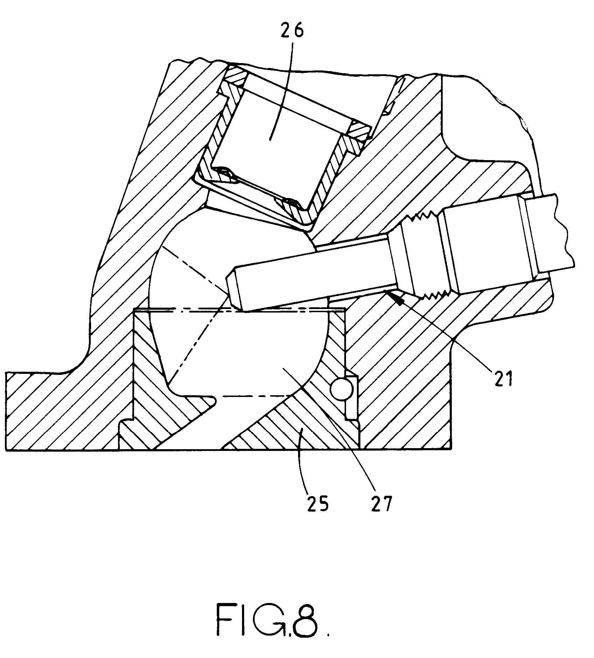

In tests carried out with the type of sensor shown in Figure 4 before and after a period of use in an engine it was found that the shape of the response envelope of the sensor to light directed towards it at different angles was largely unchanged except in the case where the light was directed more or less normal to the flat end of the rod. However, the overall sensitivity was reduced due to the disposition of soot. Figure 8 shows a sensor 21 in which the portion of the body part which lies between the tapered portion and the inner end of the body part, is extended so that the inner end of the body part lies closer to the centre of the combustion chamber 27. By placing the end portion of the body part at or near the centre of the combustion chamber it has been discovered that the cleaning effect of the hot gases within the combustion chamber is enhanced. With a sensor of the type shown in Figure 1, the area of the combustion chamber which would be under observation by the sensor would be very small whereas when a sensor in accordance with the invention is utilised the area of the combustion chamber which is under observation is still sufficient to guarantee a reliable signal to the engine control system. Figure 8 does of course show the combustion chamber of an indirect injection compression ignition engine with the combustion chamber being inpart defined by an insert 25 mounted in the cylinder head. Figure 8 also shows the disposition of the bore 26 in which the fuel injection nozzle is accommodated.

## Claims

1. A fuel ignition sensor for use with internal combustion engines comprising a tubular body (10) adapted to be mounted in use in the cylinder head of an engine so that the inner end (12) of the body is disposed in the combustion chamber of the engine, a bore (15) in the body, a rod (17) formed from radiation transmitting material mounted in the bore (15), the rod being secured within the bore by means of bonding material, the end of the rod at said inner end of the body acting as a window through which radiation generated on combustion of fuel in the combustion chamber, passes into the rod (17) and is transmitted through the rod to a radiation responsive device (18) characterised in that the bore (15) at said inner end (12) of the body (10) is tapered inwardly to the end of the body, the taper extending to the end of the bore, and the end portion of the rod (17) is of complementary shape whereby the end of the rod lies flush with or extends beyond the end of the body (10).

2. A sensor according to Claim 1 in which the rod (17) extends beyond the end of the body (10) characterised in that the extending portion of the rod is tapered and has a flat end.

3. A sensor according to Claim 2 characterised in that the extending portion of the rod has first and second tapered sections (23, 24).

4. A sensor according to Claim 1 in which the rod (17) extends beyond the end of the body (10) and tapers to a point.

5. A sensor according to Claim 4 characterised in that the extending portion of the rod has first and second tapered sections.

## Patentansprüche

1. Kraftstoffzündsensor zur Benutzung mit einer Verbrennungskraftmaschine, mit einem röhrenförmigen Körper (10), der so ausgelegt ist, das er bei Benutzung in dem Zylinderkopf eines Motors so angebracht wird, daß das innere Ende (12) des Körpers in der Verbrennungskammer des Motors vorgesehen ist, einer Bohrung (15) in dem Körper, einer Stange (17), die aus Material, das Strahlung überträgt, gemacht ist und in der Bohrung (15) angebracht ist, wobei die Stange innerhalb der Bohrung mittels Verbindungsmaterial befestigt ist, das Ende der Stange an dem inneren Ende des Körpers als ein Fenster wirkt, durch das auch die Verbrennung von Kraftstoff in der Verbrennungskammer hin erzeugte Strahlung in die Stange (17) tritt und durch die Stange zu einer strahlungsempfindlichen Vorrichtung (18) übertragen wird, dadurch gekennzeichnet, daß die Bohrung (15) an dem inneren Ende (12) des Körpers (10) nach innen zu dem Ende des Körpers hin angeschrägt ist, die Anschrägung sich zu dem Ende der Bohrung erstreckt und der Endabschnitt der Stange (17) von komplementärer Form ist, wodurch das Ende der Stange mit dem Ende des Körpers (10) fluchtet oder sich darüber hinaus erstreckt.

2. Sensor nach Anspruch 1, bei dem die Stange (17) sich über das Ende des Körpers (10) hinaus erstreckt, dadurch gekennzeichnet, daß der sich erstreckende Abschnitt der Stange angeschrägt ist und ein flaches Ende aufweist.

3. Sensor nach Anspruch 2, dadurch gekennzeichnet, daß der sich erstreckende Abschnitt der Stange einen ersten und einen zweiten angeschrägten Abschnitt (23, 24) aufweist.

4. Sensor nach Anspruch 1, bei dem sich die Stange (17) über das Ende des Körpers (10) hinaus erstreckt und zu einem Punkt angechrägt ist.

5. Sensor nach Anspruch 4, dadurch gekennzeichnet, daß der sich erstreckende Abschnitt der Stange einen ersten und einen zweiten angeschrägten Abschnitt aufweist.

## Revendications

1. Détecteur d'allumage de carburant pour être utilisé avec des moteurs à combustion interne, comprenant un corps tubulaire (10) conçu pour être monté en service dans la tête de cylindre d'un moteur de telle sorte que l'extrémité interne (12) du corps est disposée dans la chambre de combustion du moteur, un alésage (15) pratiqué dans le corps, une tige (17) façonnée en une matière qui transmet le rayonnement monté dans l'alésage (15), la tige étant fixée à l'intérieur de l'alésage au moyen d'une matière adhésive, l'extrémité de la tige à ladite extrémité interne du corps faisant office de fenêtre à travers laquelle passe le rayonnement généré lors de la combustion du carburant dans la chambre de combustion, pour aboutir dans la tige (17) et est transmis à travers la tige à un dispositif (18) sensible au rayonnement, caractérisé en ce que l'alésage (15) à ladite extrémité interne (12) du corps (10) est conique vers l'intérieur en direction de l'extrémité du corps, le cône s'étendant jusqu'à l'extrémité de l'alésage, et la portion terminale de la tige (17) est de configuration complémentaire, par lequel l'extrémité de la tige vient se disposer à fleur avec l'extrémité du corps (10) ou bien s'étend au-delà de cette dernière.

2. Détecteur selon la revendication 1, dans lequel la tige (17) s'étend au-delà de l'extrémité du corps (10), caractérisé en ce que la portion d'extension de la tige est conique et possède une extrémité plate.

3. Détecteur selon la revendication 2, caractérisé en ce que la portion d'extension de la tige possède des première et seconde sections coniques (23, 24).

4. Détecteur selon la revendication 1, dans lequel la tige (17) s'étend au-delà de l'extrémité du corps (10) et s'amincit en forme de pointe.

5. Détecteur selon la revendication 4, caractérisé en ce que la portion d'extension de la tige possède des première et seconde sections coniques.
